# EUROPÄISCHE PATENTSCHRIFT

(11) **EP 0 533 721 B1**
(45) Veröffentlichungstag und Bekanntmachung des Hinweises auf die Patenterteilung: **10.04.1996**
(21) Anmeldenummer: 91910552.8
(22) Anmeldetag: 07.06.1991
(51) Int. Cl.: H04N 5/782

(54) **FERNSEHEMPFANGSGERÄT**
TELEVISION SET
APPAREIL RECEPTEUR DE TELEVISION

(30) Priorität: 15.06.1990 DE 4019248
(43) Veröffentlichungstag der Anmeldung: 31.03.1993
(73) Patentinhaber: DEUTSCHE THOMSON-BRANDT GMBH, D-78048 Villingen-Schwenningen (DE)
(72) Erfinder: WÖRDEMANN, Hermes, D-3250 Hameln 7 (DE)
(86) Internationale Anmeldenummer: EP9101056
(87) Internationale Veröffentlichungsnummer: WO9120157

(56) Entgegenhaltungen:
- EP-A- 0 118 104
- WO-A-87/00380
- DE-A- 3 801 523
- DE-C- 3 615 196
- Patent Abstracts of Japan, Band 13, Nr. 470, (E-835)[3818], 24. Oktober 1989, & JP,A,1183967 (MITSUBISHI ELECTRIC CORP.), 21 Juli 1989

## Beschreibung

Die Erfindung betrifft ein Fernsehempfangsgerät nach dem Oberbegriff von Anspruch 1. Derartige Geräte sind handelsüblich, vgl. beispielsweise WO-A-8700380. So ist es bekannt, einen Videorecorder auf einen Sendebeitrag eines bestimmten Senders durch Eingabe von Uhrzeit, Datum und Betätigen der Stationstaste des gewünschten Senders für eine Aufzeichnung vorzuprogrammieren. Den einzelnen Stationstasten sind durch individuelle Eingabe Sender (Frequenzen) zugeordnet, die aus den am Ort empfangbaren Sendern ausgewählt worden sind.

Zur beitragsgesteuerten Aufzeichnung von Sendebeiträgen ist es bekannt (DE-B- 33 28 001), einen Sendebeitrag mit einem ausgestrahlten Code, der in der Signalaustastlücke des Fernsehsignales ständig übertragen wird, zu kennzeichnen. Dieser Code enthält unter anderem Daten für Anfangsuhrzeit, Datum und Programmquelle (Sender). Ein vorprogrammiertes Gerät wird zu der vorbestimmten Zeit, unabhängig von der Art der Eingabe, beitragsgesteuert oder zeitgesteuert, vom Standby-Betrieb in den Empfangsbetrieb umgeschaltet und bei einem Videorecorder wird automatisch die Aufnahme des gewünschten Sendebeitrages durchgeführt. Nun ist es möglich, daß während des Empfangsbetriebes der eingestellte Sender ausfällt, so daß z.B. bei einem Videorecorder die Aufzeichnung nicht bis zu Ende des Sendebeitrages durchgeführt werden kann.

Es ist Aufgabe der Erfindung, trotz Ausfall des eingestellten Senders während der vorgegebenen Zeit einen Empfang bzw. eine vollständige Aufzeichnung zu ermöglichen.

Diese Aufgabe wird gemäß der Erfindung durch die im Anspruch 1 aufgeführten Merkmale gelöst. Vorteilhafte Weiterbildungen der Erfindung sind in den abhängigen Ansprüchen gekennzeichnet.

Im Prinzip wird bei Ausfall des empfangenen Senders, nach Einschalten eines vorprogrammierten Sendebeitrages im Gerät, automatisch auf einen "Ersatzsender" umgeschaltet, dessen kennzeichnender Code mit dem Code des eingestellten Senders übereinstimmt. Hierzu ist es erforderlich, daß ein "Ersatzsender" wenn auch evtl. mit geringerer empfangenen Feldstärke auf einer der Stationstasten des Gerätes einprogrammiert ist, oder aber eine andere Programmkette denselben Programmbeitrag ausstrahlt. Dieses ist z.B. bei gemeinsamem ARD/ZDF-Vormittagsprogramm der Fall. Der Umschaltvorgang wird durch eine Auswahleinrichtung bewirkt, die im wesentlichen einen Speicher, eine Vergleichsschaltung und eine Anordnung zum Abfragen der Stationstasten, d.h. der gespeicherten Frequenzen (Scan-Betrieb) aufweist. Ferner muß im Gerät eine Schaltung zur Aufbereitung des einen Sendebeitrag kennzeichnenden Codes (VPS-Decoder) enthalten sein.

Nach dem Einschalten vom Standby- in den Empfangsbetrieb wird vom VPS-Deocder der kennzeichnende Code generiert und in den Speicher eingegeben, in welchem der Code für die Dauer des gewünschten Sendebeitrages gespeichert bleibt. Dieser gespeicherte Code wird in der Vergleichsschaltung mit dem ständig empfangenen Code verglichen. Bei Übereinstimmung gibt die Vergleichsschaltung kein Signal ab. Erst bei Fehlen des vorher empfangenen Codes wird ein Schaltsignal generiert, durch welches der Scan-Betrieb, d.h. die Abfrage der Stationstasten auf gespeicherte Sender mit deren Code-Informationen eingeleitet wird. Nun ist es möglich, daß zwar keine Code-Information vorhanden ist, jedoch die Nutzinformation, d.h. das FBAS-Signal weiterhin empfangen wird. Um für diesen Fall den Scan-Betrieb zu verhindern, ist der Vergleichsschaltung eine Logikschaltung nachgeordnet, von der erst bei Fehlen des FBAS-Signales der Scan-Befehl ausgegeben wird.

In an sich bekannter Weise werden jetzt die Stationstasten (Speicherplätze) in einer vorgegebenen Folge, z.B. in der Reihenfolge der Programmplatz-Nummern zyklisch angesteuert. Wird ein Sender eingestellt, dessen Code (Uhrzeit, Programmquellen-Code) mit dem gespeicherten Code übereinstimmt, stoppt der Scan-Betrieb, da von der Vergleichsschaltung kein Signal mehr ausgegeben wird. Es ist möglich, daß dieser erste gefundene Sender mit einer geringen, Feldstärke empfangen wird, während andere, noch nicht abgefragte Sender, eine größere Feldstärke aufweisen. Um auch die Abfrage dieser Sender zu ermöglichen, kann eine weitere Schaltung vorgesehen sein, durch die zunächst eine Abfrage aller empfangenen Sender erfolgt. Mittels dieser Schaltung werden die Stations-Speicherplätze mit übereinstimmendem Code und zugehörigen Feldstärken ausgewertet und derjenige Sender eingstellt, der die besten Empfangsbedingungen bietet. Eine derartige Schaltung ist recht aufwendig, jedoch realisierbar, z.B. durch den Einsatz eines Mikroprozessors.

In der einfachen Version ohne Feldstärkebewertung ist es jedoch sinnvoll, empfangbare Sender nach Feldstärke sortiert in den Stationsspeicher z.B. nach ansteigenden Programm-Nummern einzuordnen, wenn in dieser Folge auch der Scan-Betrieb abläuft.

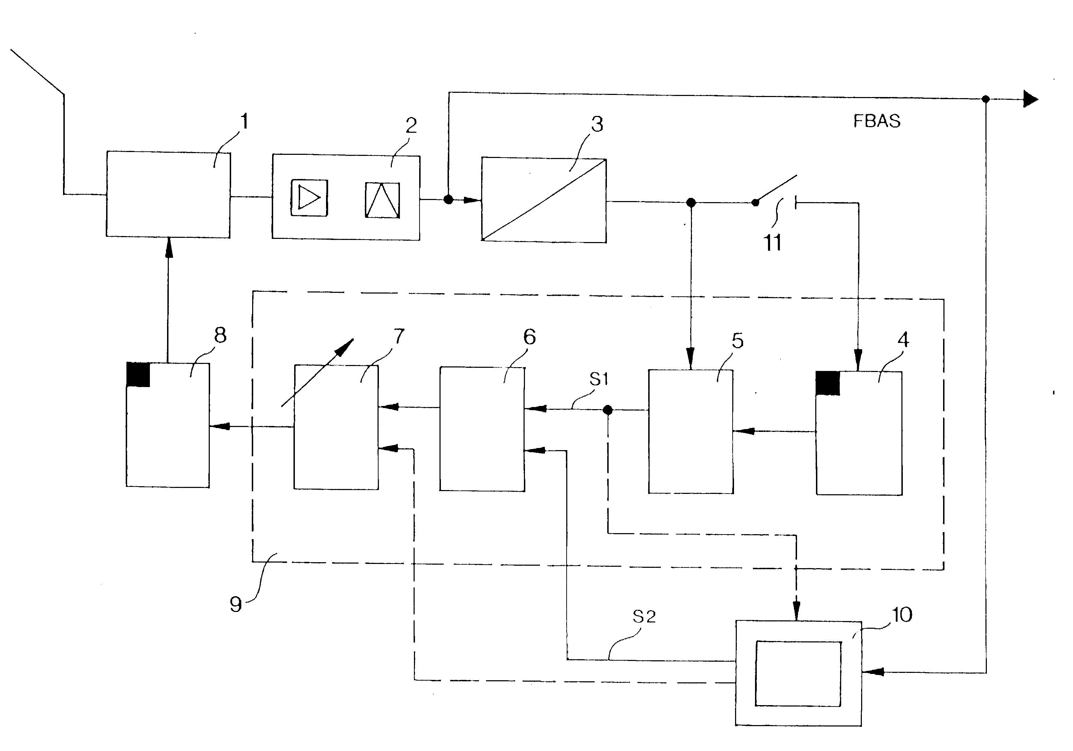

Im folgenden soll die Erfindung anhand eines beispielhaften Blockschaltbildes in der Figur näher erläutert werden.

Die Figur zeigt den Eingangsteil eines Fernsehempfangsgerätes. Das von der Antenne empfangene Signal wird dem Eingang eines Tuners 1 zugeführt. Die Abstimmung des Tuners 1 auf am Ort empfangbare Fernsehsender geschieht durch im Speicher 8 fest einprogrammierte Werte, z.B. durch Gleichspannungen, die bestimmten Empfangsfrequenzen beim Programmieren zugeordnet worden sind. Die Sender werden durch Betätigen von zugehörigen, nicht dargestellten Stationstasten, oder durch eine Abfrageschaltung 7 eingestellt und an den Tuner 1 zwecks Abstimmung weitergeleitet. Dem Tuner ist eine Verstärker- und Demodulationsschaltung 2 nachgeschaltet, von der das FBAS-Signal eines Senders einerseits an die weitere Verarbeitungsschaltung im Gerät und andererseits einem VPS-Decoder 3 zugeführt ist.

Im VPS-Decoder 3 wird das in der Austastlücke enthaltene VPS-Signal aufbereitet und in einen Code umgewandelt, der über Schalter 11 in den Speicher 4 eingelesen und auch an einen ersten Eingang einer Vergleichsschaltung 5 angelegt ist. Schalter 11 wird jeweils bei Beginn eines einprogrammierten Sendebeitrages von einer nicht dargestellten Programmiereinrichtung eingeschaltet und z.B. zeitgesteuert nach Einlesen des Codes abgeschaltet, damit sichergestellt ist, daß während des gewünschten Sendebeitrages der Code gespeichert bleibt. Dem weiteren Eingang von Vergleichsschaltung 5 ist der in Speicher 4 gespeicherte Code zugeführt. Solange an der Vergleichsschaltung 5 gleiche Codesignale anliegen, wird kein Ausgangssignal erzeugt. Erst bei Fehlen des empfangenen Codes am ersten Eingang wird ein Ausgangssignal S1 generiert, welches einem Eingang einer Logikschaltung 6 zugeführt ist. Der zweite Eingang von Logikschaltung 6 ist mit einer Auswerteschaltung 10 verbunden, in welcher aus dem FBAS-Signal ein Ausgangssignal S2 generiert wird. Ist keine Übereinstimmung von Vergleichsschaltung 5 gemeldet (Signal S1) und auch kein FBAS-Signal vorhanden (S2), wird von der Logikschaltung 6 die Abfrageschaltung 7 gestartet. Von dieser werden die in Speicher 8 mit Stationen belegten Programmplätze nach einer vorgegebenen Folge eingestellt. Wird ein Sender gefunden, dessen Code mit dem im Speicher 4 gespeicherten Code übereinstimmt, stoppt der Abfragevorgang und der gefundene Sender bleibt für den weiteren Empfang eingestellt.

In einer weiteren möglichen Version erfolgt die Einstellung des "Ersatzsenders" mit Hilfe einer Feldstärkeauswertung der durch die Abfrageschaltung 7 eingestellten Sender. Hierzu ist es erforderlich, alle einstellbaren Sender auf Feldstärke und Code abzufragen, damit der Sender eingestellt werden kann, der die beste Empfangsmöglichkeit bietet. Für diesen Fall ist die Auswerteschaltung 10 mit einem Mikroprozessor versehen, dem neben dem FBAS-Signal zur Auswertung der Feldstärke auch das von Logikschaltung 5 generierte Signal zur Auswertung über die gestrichelte Verbindungslinie zugeführt ist. Ferner wird erst nach Erkennung des optimalen "Ersatzsenders" über die gestrichelte Verbindung zwischen Auswerteschaltung 10 und Abfrageschaltung 7 der Abfragevorgang gestoppt.

Es ist auch möglich, nach einer erfolgten Einstellung eines "Ersatzsenders", den Abfragevorgang in bestimmten Zeitintervallen zu wiederholen, um den ursprünglich vorgesehenen Sender, der eventuell wieder zu emfanqen ist, erneut einzustellen. Allerdings bedeutet eine derartige Abfrage mit Geräten, die nur einen Tuner aufweisen, eine weitere Unterbrechung z.B. in einer Aufzeichnung, so daß es für diese Möglichkeit zweckmäßig ist, einen zweiten Tuner für Einstellzwecke vorzusehen.

## Patentansprüche

1. Fernsehempfangsgerät, insbesondere Videorecorder, mit einer Programmiereinrichtung für das Einschalten des Gerätes auf Empfang und/oder Aufzeichnen eines Sendebeitrages eines ausgewählten Senders, wobei der Sendebeitrag durch einen kennzeichnenden Code nach dem VPS-System (Zeitcode) im Gerät auswertbar ist und im Gerät eine Auswahleinrichtung (9) für empfangbare Sender, insbesondere für gespeicherte Sender (8), vorgesehen ist, dadurch gekennzeichnet, daß im Gerät zusätzlich zu dem den Sendebeitrag betreffenden Zeitcode auch ein nach dem VPS-System vorgesehener, den Sender kennzeichnender Programmquellencode im Gerät auswertbar ist, daß durch die Auswahleinrichtung (9) bei einem nach Beginn des Sendebeitrages auftretenden Ausfall des ausgewählten Senders automatisch ein Sender für den weiteren Empfang eingestellt wird, bei dem der kennzeichnende Code (Zeitund Programmquellencode) mit dem empfangenen Code des ausgewählten Sendebeitrages übereinstimmt.

2. Fernsehempfangsgerät nach Anspruch 1, dadurch gekennzeichnet, daß die Auswahleinrichtung (9) einen Speicher (4) aufweist, in welchen bei Beginn des ausgewählten Sendebeitrages dessen kennzeichnender Code eingelesen wird, ferner eine Vergleichsschaltung (5), in welcher der gespeicherte Code mit dem empfangenen Code verglichen wird, von der bei Ausfall des empfangenen Codes ein Steuersignal (S1) ausgegeben wird.

3. Fernsehempfangsgerät nach Anspruch 1 oder Anspruch 2, dadurch gekennzeichnet, daß als weiteres Kriterium für den Ausfall des ausgewählten Sendebeitrages ein fehlendes FBAS-Signal ausgewertet wird, von dem bei Ausfall ein Steuersignal (S2) abgeleitet wird.

4. Fernsehempfangsgerät nach einem der Ansprüche 2 - 3, **dadurch gekennzeichnet**, daß der Vergleichsschaltung (5) eine Logikschaltung (6) nachgeschaltet ist, der das aus dem FBAS-Signal abgeleitete Schaltsignal (S2) und das von der Vergleichsschaltung (5) abgegebene Signal (S1) zugeführt ist.

5. Fernsehempfangsgerät nach einem der Ansprüche 1 - 4, **dadurch gekennzeichnet**, daß durch die Steuersignale (S1, S2) eine Steuerschaltung (7) zur Abfrage gespeicherter empfangbarer Sender (Frequenzen) aktivierbar ist.

6. Fernsehempfangsgerät nach Anspruch 1, **dadurch gekennzeichnet**, daß bei mehreren empfangbaren Sendern mit möglicher Code-Übereinstimmung ein Vorzugssender einstellbar ist, der
a) durch eine vorgegebene Reihenfolge in der Speicherplatzzuweisung oder
b) durch Auswertung der jeweils empfangenen Feldstärke auswählbar ist.

7. Fernsehempfangsgerät nach Anspruch 1, **dadurch gekennzeichnet**, daß im Gerät ein zweiter Tuner für Einstellzwecke vorgesehen ist.

## Claims

1. A television receiving device, in particular a video recorder, with a programming device for the switching on of the device to receive and/or record a broadcast program of a selected transmitter, where the program can be analysed by an identifying code according to the VPS-system (time code) in the device, and in the device a selection device (9) for receivable transmitters, in particular for stored transmitters (8), is provided, characterised in that in the device, in addition to the time code relating to the program, a given program source code according to the VPS-system identifying the transmitter can be analysed in the device, that by means of the selection device (9) in the event of a breakdown of the selected transmitter occurring after the start of the program a transmitter is automatically set up for the continued reception, in the case of which transmitter the identifying code (time code and program source code) corresponds to the reccived code of the selected program.

2. A television receiving device as claimed in Claim 1, characterised in that the selection device (9) comprises a memory (4) into which, at the start of the selected program, the identifying code of said program is input, and further comprises a comparator circuit (5) in which the stored code is compared with the received code and from which a control signal (S1) is output in the event of the loss of the received code.

3. A television receiving device as claimed in Claim 1 or Claim 2, characterised in that as a further criterion for the loss of the selected program, an absent CVBS signal is analysed from which a control signal (S2) is derived.

4. A television receiving device as claimed in one of Claims 2 - 3, characterised in that the comparator circuit (5) is connected at its output end to a logic circuit (6) which is supplied with the switching signal (S2) derived from the CVBS signal and with the signal (S1) emitted from the comparator circuit (5).

5. A television receiving device as claimed in one of Claims 1 - 4, characterised in that a control circuit (7) for the interrogation of stored receivable transmitters (frequencies) can be activated by the control signals (S1, S2).

6. A television receiving device as claimed in Claim 1, characterised in that in the case of a plurality of receivable transmitters with possible code identity, a preferred transmitter can be set up which can be selected
a) by a predetermined sequence in the memory location allocation or
b) by the analysis of the received field strength in each case received.

7. A television receiving device as claimed in Claim 1, characterised in that a second tuner for setting purposes is provided in the device.

## Revendications

1. Récepteur de télévision, et notamment magnétoscope, comportant une unité de programmation pour mettre l'appareil sur réception et/ou enregistrement d'une émission transmise par un émetteur sélectionné où ladite émission peut être analysée dans l'appareil grâce à un code distinctif selon le système VPS (code relatif à temps), et où l'appareil comprend une unité de sélection (9) des émetteurs recevables, et notamment des émetteurs mémorisés (8), ledit récepteur de TV étant **caractérisé en ce** qu'il permet d'analyser non seulement le code relatif à temps spécifiant l'émission, mais aussi un code de source de programme selon le système VPS prévu pour désigner l'émetteur, **caractérisé également en ce** que l'unité de sélection (9) sélectionne automatiquement un émetteur dont le code distinctif (code relatif à temps et code de source de programme) correspond au code de l'émission reçue, permettant ainsi de poursuivre la réception au moment où une interruption intervient dans l'émission transmise par l'émetteur sélectionné initialement.

2. Récepteur de télévision selon la revendication 1 **caractérisé en ce** que l'unité de sélection (9) comporte une mémoire (4) dans laquelle est enregistré le code distinctif d'une émission dès que celle-ci commence, ainsi qu'un circuit comparateur (5) assurant la comparaison du code mémorisé avec le code reçu et transmettant un signal de commande (S1) dès que le code reçu fait défaut.

3. Récepteur de télévision selon l'une quelconque des revendications 1 ou 2 **caractérisé en ce** qu'un second critère pour l'interruption d'une émission choisie est obtenu par l'analyse d'un signal FBAS absent servant à produire un signal de commande (S2) en cas d'interruption.

4. Récepteur de télévision selon l'une quelconque des revendications 2 ou 3 **caractérisé en ce** que ledit circuit comparateur (5) est suivi d'un circuit logique 6 qui reçoit le signal de commande (S2) déduit du signal FBAS et le signal (S1) produit par le circuit comparateur (5).

5. Récepteur de télévision selon l'une quelconque des revendications 1 à 4 **caractérisé en ce** que les signaux de commande (S1, S2) permettent d'activer un circuit de contrôle (7) servant à interroger les émetteurs (fréquences) recevables.

6. Récepteur de télévision selon la revendication 1 **caractérisé en ce** qu'un émetteur préférentiel peut être sélectionné parmi plusieurs émetteurs recevables dont les codes sont identiques, et ce
a) soit grâce à un ordre défini dans l'affectation des emplacements de mémoire,
b) soit grâce à l'analyse de l'intensité de champ reçue dans chaque cas.

7. Récepteur de télévision selon la revendication 1 **caractérisé en ce** qu'il comporte un second tuner prévu aux fins de réglage.
